# EUROPEAN PATENT SPECIFICATION

(11) **EP 0 500 956 B1**
(45) Date of publication and mention of the grant of the patent: **07.10.1998**
(21) Application number: 91915714.9
(22) Date of filing: 31.08.1991
(51) Int. Cl.: G06F 17/60

(54) **DATA TRANSFER SYSTEM AND DATA TRANSFER TERMINAL UNIT**
DATENÜBERTRAGUNGSSYSTEM UND DATENÜBERTRAGUNGSENDEINRICHTUNG
SYSTEME DE TRANSFERT DE DONNEES ET TERMINAL DE TRANSFERT DE DONNEES

(30) Priority: 31.08.1990 JP 231720/90
(43) Date of publication of application: 02.09.1992
(73) Proprietor: MATSUSHITA ELECTRIC INDUSTRIAL CO., LTD., Kadoma-shi, Osaka-fu, 571 (JP)
(72) Inventor: AOKI, Shigeo, Ikoma-shi, Nara 630-02 (JP); OKA, Takuya, Hirakata-shi, Osaka 573 (JP); KIMURA, Yukihiko, Ikoma-shi, Nara 630-02 (JP)
(74) Representative: Eisenführ, Speiser & Partner
(86) International application number: JP9101166
(87) International publication number: WO9204680

(56) References cited:
- EP-A- 0 256 768
- EP-A- 0 421 808
- JP-A-61 278 989
- JP-A-62 501 239
- JP-B-58 053 784

## Description

The present invention relates to data transfer system and data transfer terminal device used in transactions by transferring data electronically by using plural portable data carriers at wholesalers or the like trading in cash in the field of distribution.

### TECHNICAL BACKGROUND

In the field of distribution such as wholesalers trading in cash, not using play-later settling means such as credit sale, bill and credit card, hitherto, cash or check has been used.

In such field of distribution, however, a relatively large amount of money is settled (generally hundreds of thousand of yen to millions of yen), the cash is too bulky or hard to count, or carrying of a huge sum of cash itself is a risky victim of crime.

On the other hand, the check is free of problems of bulkiness and counting, but is inferior to cash in creditability and readiness in cashing. That is, it involves the problems of risk of being dishonored, taking much time for validation before cashing, and impossibility of confirming authenticity of its holder unlike the cash, that is, the security is low, which is one of the triggers of inducing crimes. That is, if a criminal robs the authentic owner of its check and the owner is arrested and cannot report, although lacking in readiness, its cashing cannot be prevented.

Conventional transaction processing systems like the one disclosed in the European patent publication EP-A- 256768 make use of both a customer's microchip card reader/writer for communicating with a customer's microchip card and a vendor's microchip card reader/writer for communicating with a vendor's microchip card. Data-interchange with the respective reader/writers is provided for debiting the amount of the transaction from the balance recorded in the customer's microchip card and crediting that same amount to the balance recorded in the vendors microchip card.

### SUMMARY OF THE INVENTION

To solve the above problems of the prior art, it is hence a primary object of the invention to present data transfer system and data transfer terminal device capable of settling easily and at high security without having to carry cash.

To achieve the above object, the data transfer system of the invention as defined in independent claim 1, using first and second data carriers, is designed to transfer either part or whole of the data held in the first data carrier to the second data carrier by using a data transfer terminal device, and verify the data transferred from the data transfer terminal device and the data from the second data carrier by using a host computer, thereby settling between the accounts of the owner of the first data carrier and the owner of the second data carrier.

The data transfer terminal device, possessing insertion slots for receiving two data carriers, is composed to be activated only when the two data carriers are inserted, and transfer either part or whole of the data held in the first data carrier to the second data carrier by the instruction from the owner of the first data carrier.

This constitution makes it possible to settle easily at high security without using cash or check.

### BRIEF DESCRIPTION OF THE DRAWINGS

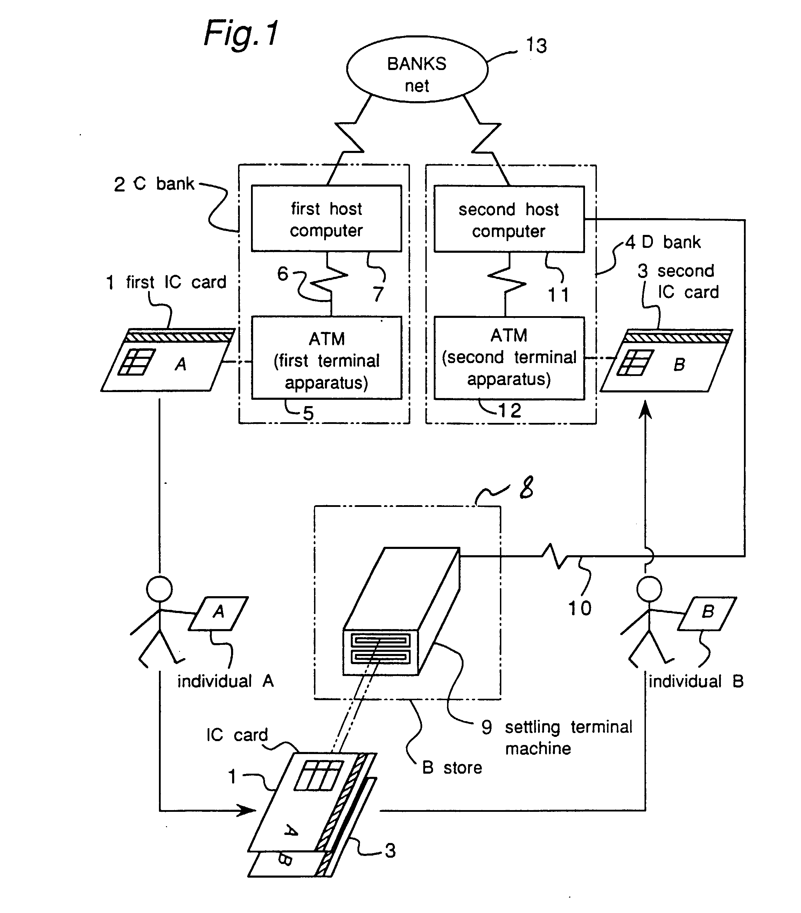

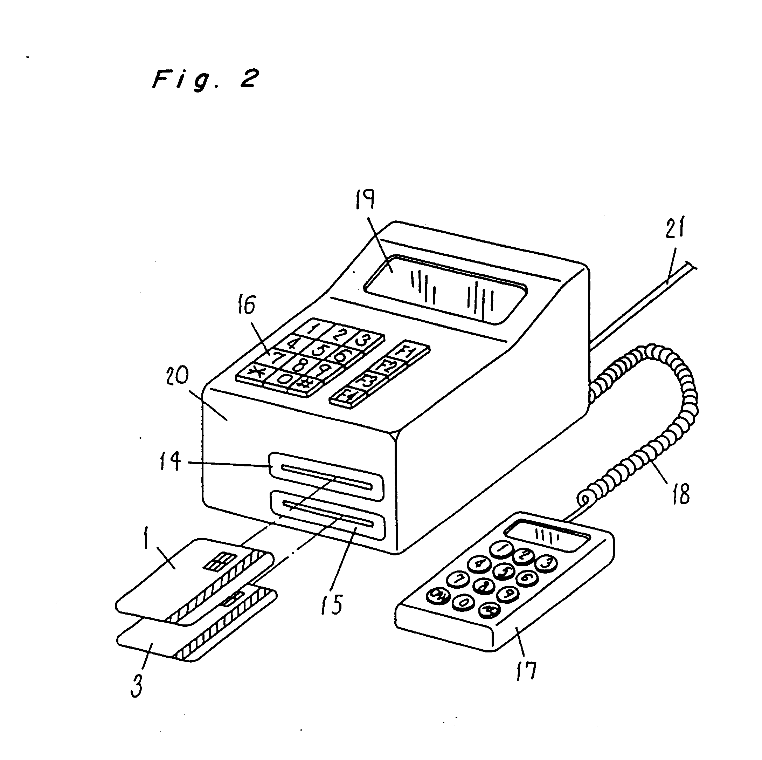

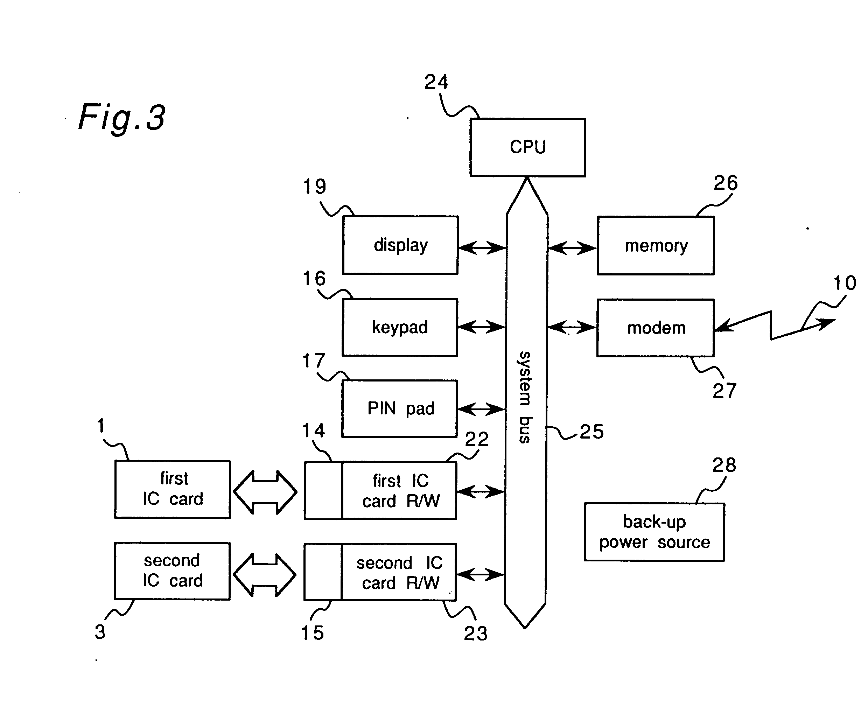

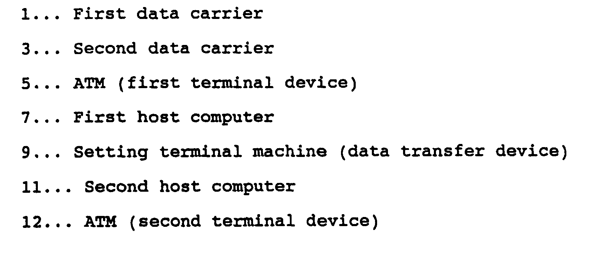

Fig. 1 is a block diagram of the settling system using the data transfer system in an embodiment of the invention. Fig. 2 is a perspective outline view of the settling terminal machine used in the settling system in an embodiment of the invention, and Fig. 3 is a block diagram of the same settling terminal machine.

A block diagram of a settling system using the data transfer system according to an embodiment of the invention is shown in Fig. 1. In the diagram, numeral 1 is a first data carrier (IC card), which is granted from C bank 2 to an individual (or store or company) A having an account in the C bank 2. Numeral 3 is a second data carrier (IC card), which is granted from D bank 4 to an individual (or store or company) B having an account in the D bank 4.

The manner of settling system by using IC cards is explained by reference to Fig. 1.

The individual A inserts the first IC card 1 into an ATM (automated teller machine) 5 of the C bank 2 and manipulates as specified, and a certain amount of money, for example, 2 million yen is deduced from the account of the individual A and is retained in balance in the IC chip of the IC card 1. At the same time, the data is transmitted to a host computer 7 connected with the ATM 5 through communication line 6, and 2 million yen is held out of the balance in the account of the individual A.

The individual A brings the first IC card 1 to B store 8 to be used in settling at the B store 8. This B store 8 is, for example, a pay-in-cash wholesaler. The individual A settles, for example, 1,500,000 yen at the B store 8. The first IC card 1 is inserted into the first insertion slot of a settling terminal machine 9, and the B store 8 inserts the second IC card 3 into the second insertion slot. As the individual A enters necessary details in the settling terminal machine 9, the specific amount (1,500,000 yen in this case) in the retained amount (2 million yen in this case) held in the IC chip in the first IC card 1 moves into the IC chip in the second IC card 3, and the second IC card 3 has received 1,500,000 yen from the first IC card 1. This result is sent to a host computer 11 of D bank 4 through a communication line 10.

B store 8 brings the second IC card 3 to D band 4, and inserts it into its ATM 12 and manipulates as specified, and then, in this example, 1,500,000 yen is received from the second IC card 3 into the account of the individual B of the D bank 4. In this stage, the validity of the money received by the second IC card 3 is confirmed by verifying with the transaction result preliminarily transmitted from the settling terminal machine 9 to the host computer 11. Between the banks, furthermore, settlement is done by communicating through, for example, BANKS net 13.

In this procedure, the funds may be transferred from the bank account of the individual A to the bank account of the B store 8 by using two IC cards 1, 3 and the settling terminal machine 9, without handling the troublesome and perilous cash or check.

In this case, the communication of the result of transaction from the settling terminal machine 9 to the host computer 11 through the communication line 10 (or an ordinary telephone circuit) may not be necessarily online real time transfer, but may be offline batch transfer. That is, in the off-business hours in the nighttime, Saturday or holidays of D bank 4, the results of transaction are once accumulated in the settling terminal machine 9, and may be transferred after the D bank 4 resumes its business. Usually, the host computer 11 resumes its operation earlier than the transfer from the second IC card 3 to the bank account of B store 8 by using ATM 12, and the transactions results in the settling terminal machine 9 have been already sent to the host computer 11. Therefore, the result of transaction can be checked immediately on the point of receipt settlement by the ATM 12. However, if the result of transaction is not sent to the host computer 11 because, for example, the power of the settling terminal machine 9 has been cut off on holiday of B store 8, it is treated as "provisional receipt" at the time of receipt settlement at the ATM 12, and a formal receipt may be registered when the result of transaction is later sent from the settling terminal machine 9. Therefore, it does not matter at all if the settling terminal machine 9 is remote from the bank. This is same as the state in the conventional transaction by check that the cash is not paid until the fund settlement is finished between the banks by confirmation of the content of the check if the check is brought to the bank and entered in the bank book.

Fig. 2 shows the appearance of the settling terminal machine 9 used in the settling system of the invention. The first IC card 1 is inserted into the first insertion slot 14 and the second IC card 3 into the second insertion slot 15, and a key pad 16 is manipulated as specified, and the owner of the first IC card 1 enters his personal identification number through a pin pad 17, then the amount specified by the key pad 16 is transferred to the second IC card 3 from the amount retained in balance in the first IC card 1. Numeral 18 is a pin pad cord. The process and result of this settling can be confirmed on a display 19. The result of transaction is stored in the memory in a main body 20 of the settling terminal machine 9, and is transferred to the host computer (numeral 11 in Fig. 1) of the bank through a telephone cord 21.

Fig. 3 is a block diagram of the settling terminal machine 9 used in the settling system of the invention.

The first IC card 1 is inserted into a first IC card reader/writer (R/W) 22 through the first insertion slot 14. The second IC card 3 is inserted into a second IC card R/W 23 through the second insertion slot 15. The owner of the first IC card 1 manipulates the key pad 16 as specified while monitoring the display 19, and enters the personal identification number of the first IC card 1 through the pin pad 17, then a CPU 24 transfers the fund from the first IC card 1 in the first IC card R/W 23 through a system bus 25, and stores the result of the transaction in a memory 26. The result of the transaction stored in the memory 26 is transferred to the bank through a modem 27 and communication line 10. A back-up power source 28 is provided in order to feed power to the CPU 24 and input and output devices so that normal processing may be completed even if a power failure occurs while processing. The memory 26 may be divided into a memory for storing programs, a memory for storing tentative information in the midst of processing, and a memory for storing the result of transaction, and in particular the memory for storing the result of transaction is an EEPROM (electrically erasable programmable read only memory), for safety precaution, which is a nonvolatile memory that can be erased electrically but retains its content if the power is cut off. In the CPU 24, an enciphering logic is incorporated, and the data in the memory for storing the result of transaction is enciphered data so that it cannot be revised illegally, and thus due considerations are given to the safety and security of data also in the settling terminal machine 9.

The IC card 1 or 3 is also enhanced in security similarly by incorporating the enciphering logic or the like.

In this embodiment, the ATM 5 or 12 is used as the input device into the IC card at the bank, but any other device having same function may be used. Or instead of the connection between two banks through BANKS net 13 as explained herein, they may be connected by direct line or other network such as MICS net. Instead of the two banks 2 and 4, post office or other financial institute may be also connected. Or, not limited to two banks or post offices, it is also possible to transact within a same bank or a same post office. Or the settling terminal machine 9 may not be in the B store 8, but may be in one or two of banks, post offices, or the like.

### INDUSTRIAL UTILIZATION

Thus, according to the invention, the settling system using the simple and secure media of IC cards is realized, and it is effective to solve the problems experienced in the conventional settling by using cash or check, that is, the trouble of counting, lack of readiness in cashing, low security, and risk of crime.

## Claims

1. A data transfer system, comprising:
a first terminal device (5) connected to host computer means (7, 11) and including means for coupling with a first portable data carrier (1) to transfer data from said host computer means (7, 11) to the first data carrier (1);
characterized in that
a data transfer terminal device (9) is connected to said host computer means (7, 11) and includes means (14, 22) for coupling with the first portable data carrier (1), means (15, 23) for coupling with a second portable data carrier (3), means (24, 25) for transferring either part or whole of the data stored in the first portable data carrier (1) to the second portable data carrier (3), means (26) for storing the data transferred from the first portable data carrier (1) to the second portable data carrier (3) and means (27) for transferring such data to said host computer means (11);
a second terminal device (12) is connected to the host computer means (7, 11) and includes means for coupling with said second portable data carrier (3) to transfer data from the second data carrier (3) to the host computer means (7,11); and
the host computer means (7, 11) comprises means for collating the data received from the second terminal device (12) with the data already received from the data transfer terminal device (9) and, if matched, for recognizing the data to be correct and for storing the data in said host computer means (11).

2. The system of claim 1,
wherein the data transfer terminal device (9) comprises two insertion slots (14, 15) for inserting the first and second portable data carriers (1, 3), data communication means (27), nonvolatile memory means (26), and external input means (16), wherein specified data is read out of the first portable data carrier (1) according to an instruction entered through the external input means (16), and is transferred to the second portable data carrier (3), while its data is stored in the nonvolatile memory means (26), and transferred to the host computer means (7, 11) through the data communication means (27).

3. The system of claim 1 or 2,
wherein
the host computer means (7, 11) comprise at least a first host computer (7) and a second host computer (11), said first and second host computers (7, 11) being interconnected for data exchange, the first terminal device (5) is connected to the first host computer (7) for transferring data from the first host computer (7) to the first portable data carrier (1), the data transfer terminal device (9) is connected to the second host computer (11) and the transferring means (27) is provided for transferring the data to the second host computer (11), the second terminal device (12) is connected to the second host computer (11) and the means for coupling with the second portable data carrier (3) is provided for transferring data from the second portable data carrier (3) to the second host computer (11), and
the second host computer (11) comprises the means for collating the data received from the second terminal device (12) with the data already received from the data transfer terminal device (9) and, if matched, for recognizing the data to be correct and for storing the data.

## Patentansprüche

1. Datenübertragungssystem, enthaltend:
ein erstes Terminalgerät (5), das mit Zentralcomputermitten (7, 11) verbunden ist, und welche Mittel zur Kopplung mit einem ersten, tragbaren Datenträger (1) einschließt, um Daten von den Zentralcomputermitten (7, 11) zu dem ersten Datenträger (1) zu übertragen;
dadurch gekennzeichnet, daß
ein Datenübertragungsterminalgerät (9) mit den Zentralcomputermitten (7, 11) verbunden ist, und Mittel (14, 22) zur Kopplung mit dem ersten, tragbaren Datenträger (1), Mittel (15, 23) zur Kopplung mit einem zweiten, tragbaren Datenträger (3), Mittel (24, 25) zum Übertragen entweder eines Teils oder der Gesamtheit der in dem ersten, tragbaren Datenträger (1) gespeicherten Daten zu dem zweiten, tragbaren Datenträger (3), Mittel (26) zum Speichern der von dem ersten, tragbaren Datenträger (1) zu dem zweiten, tragbaren Datenträger (3) übertragenen Daten, und Mittel (27) zum Übertragen derartiger Daten zu den Zentralcomputermitten (11);
ein zweites Terminalgerät (12) mit den Zentralcomputermitten (7, 11) verbunden ist, und Mittel einschließt zur Kopplung mit dem zweiten, tragbaren Datenträger (3), um Daten von dem zweiten Datenträger (3) zu den Zentralcomputermitteln (7, 11) zu übertragen; und
die Zentralcomputermittel (7, 11) Mittel enthalten zum Mischen der von dem zweiten Terminalgerät (12) erhaltenen Daten mit den bereits von dem Datenübertragungsterminalgerät (9) erhaltenen Daten, und wenn passend, zum Erkennen, daß die Daten richtig sind, und zum Speichern der Daten in den Zentralcomputermitteln (11).

2. System nach Anspruch 1,
wobei das Datenübertragungsterminalgerät (9) zwei Einsteckschlitze (14, 15) zum Einstecken der ersten und zweiten, tragbaren Datenträger (1, 3), Datenkommunikationsmittel (27), nicht flüchtige Speichermittel (26), und externe Eingabemittel (16) aufweist, wobei spezifizierte Daten aus dem ersten, tragbaren Datenträger (1) gemäß einer Anweisung ausgelesen werden, die durch die externen Eingabemittel (16) eingegeben wurde, und die zu dem zweiten, tragbaren Datenträger (3) übertragen werden, während seine Daten in den nicht flüchtigen Speichermitteln (26) gespeichert werden, und welche zu den Zentralcomputermitteln (7, 11) durch die Datenkommunikationsmittel (27) übertragen werden.

3. System nach Anspruch 1 oder 2,
wobei die Zentralcomputermittel (7, 11) mindestens einen ersten Zentralcomputer (7) und einen zweiten Zentralcomputer (11) aufweisen, wobei die ersten und zweiten Zentralcomputer (7, 11) zum Datenaustausch miteinander verbunden sind, das erste Terminalgerät (5) mit dem ersten Zentralcomputer (7) zum Übertragen von Daten von dem ersten Zentralcomputer (7) zu dem ersten, tragbaren Datenträger (1) verbunden ist, das Datenübertragungsterminalgerät (9) mit dem zweiten Zentralcomputer (11) verbunden ist, und die Übertragungsmittel (27) ausgerüstet sind, um die Daten zu dem zweiten Zentralcomputer (11) zu übertragen, wobei das zweite Terminalgerät (12) mit dem zweiten Zentralcomputer (11) verbunden ist, und Mittel zur Kopplung mit dem zweiten, tragbaren Datenträger (3) vorgesehen sind, um Daten von dem zweiten, tragbaren Datenträger (3) zu dem zweiten Zentralcomputer (11) zu übertragen, und
der zweite Zentralcomputer (11) Mittel zum Mischen der von sdem zweiten Terminalgerät (12) erhaltenen Daten mit den Daten, die bereits von dem Datenübertragungsterminalgerät (9) erhalten wurden, und wenn passend, zum Erkennen, ob die Daten richtig sind, und zum Speichern der Daten.

## Revendications

1. système de transfert de données, comprenant :
un premier terminal (5) connecté à un moyen d'ordinateur principal (7, 11) et incluant un moyen pour couplage avec un premier support d'informations portable (1) pour transférer les données dudit moyen d'ordinateur principal (7, 11) au premier support d'informations (1) ;
caractérisé en ce que
un terminal de transfert de données (9) est connecté audit moyen d'ordinateur principal (7, 11) et inclut un moyen (14, 22) pour couplage avec le premier support d'informations portable (1), un moyen (15, 23) pour couplage avec un second support d'informations portable (3), un moyen (24, 25) pour transférer soit une partie, soit la totalité des informations mémorisées dans le pre support d'informations portable (1) vers le second moyen de support d'informations portable (3), un moyen (26) pour mémoriser les données transférées du premier support d'informations (1) au second support d'informations portable (3) et un moyen (27) pour transférer ces informations au moyen d'ordinateur principal (11),
Un second terminal (12) est connecté au moyen d'ordinateur principal (7, 11) et comprend un moyen pour couplage avec ledit second support d'informations portables (3) pour transférer les données du second support d'informations portable (3) au moyen d'ordinateur principal (7, 11) ; et
Le moyen d'ordinateur principal (7, 11) comprend un moyen pour collecter les données reçues du second terminal (12) avec les données déjà reçues du terminal de transfert de données (9) et si elles concordent, pour reconnaître que les données sont correctes et pour mémoriser les données dans ledit moyen d'ordinateur principal.

2. Système selon la revendication 1,
dans lequel le terminal de transfert de données 9 comprend deux fentes d'insertion (14, 15) pour insérer les premier et second supports d'informations portables (1, 3) un moyen de communication de données (27), un moyen de mémoire rémanente (26) et un moyen d'entrée externe (16), dans lequel les données spécifiées sont extraites du premier support d'information de données (1) en conformité avec une instruction entrée par l'intermédiaire du moyen d'entrée externe 16 et sont transférées au second support d'informations (3), tandis que ces données sont mémorisées dans le moyen de mémoire rémanente (26) et transférées au moyen d'ordinateur principal (7, 11) par l'intermédiaire du moyen de communication de données (27).

3. Système selon la revendication 1 ou 2, dans lequel
le moyen d'ordinateur principal (7, 11) comprend au moins un premier ordinateur principal (7) et un second ordinateur principal (11), lesdits premier et second ordinateurs principaux (7, 11) étant interconnectés pour échange de données, le premier terminal (5) est connecté au premier ordinateur principal (7) pour tranférer des données provenant du premier ordinateur principal (7) au premier support d'informations portable (1), le terminal de transfert de données (9) est connecté au second ordinateur principal (11) et le moyen de transfert (27) est prévu pour transférer les données au second ordinateur principal (11), le second terminal (12) est connecté au second ordinateur principal (11) et le moyen pour coupler le second support d'informations portable (3) est prévu pour transférer les données du second support d'informations portable (3) au second ordinateur principal (11), et
le second ordinateur principal (11) comprend le moyen pour collecter les données reçues du second terminal (12) avec les données déjà reçues du terminal de transfert de données (9) et si elles concordent, pour reconnaître que les données sont correctes et pour mémoriser les données.
